**Europäisches Patentamt**

(19) **European Patent Office**

**Office européen des brevets**

(11) Numéro de publication: **0 234 284
B1**

(12) # FASCICULE DE BREVET EUROPEEN

(45) Date de publication du fascicule du brevet:
08.11.89

(51) Int. Cl.⁴: **A23L 1/22**

(21) Numéro de dépôt: **87100871.0**

(22) Date de dépôt: **22.01.87**

(54) **Procédé pour l'aromatisation d'aliments.**

(30) Priorité: **07.02.86 CH 488/86**

(43) Date de publication de la demande:
**02.09.87 Bulletin 87/36**

(45) Mention de la délivrance du brevet:
**08.11.89 Bulletin 89/45**

(84) Etats contractants désignés:
**AT BE CH DE ES FR GB GR IT LI LU NL SE**

(56) Documents cités:
**EP-A- 0 070 719**
**EP-A- 0 109 698**
**GB-A- 1 117 227**
**GB-A- 1 327 528**
**US-A- 4 585 657**

(73) Titulaire: **FIRMENICH SA, 1, route des Jeunes Case Postale 239, CH-1211 Genève 8(CH)**

(72) Inventeur: **Holzner, Günter, 15, chemin des Palettes, CH-1212 Grand-Lancy(CH)**
Inventeur: **Kittner, Peter, 22, chemin des Cyprès, CH-1226 Thonex(CH)**

(74) Mandataire: **Salvadori, Giuseppe, Dr., c/o Firmenich S.A. Case Postale 239, CH-1211 Genève 8(CH)**

ACTORUM AG

## Description

L'intérêt croissant du consommateur à l'égard d'aliments diététiques, ou tout au moins d'aliments qui présentent une connotation de santé, d'hygiène et de bien-être a en quelque sorte dicté la création au cours des dernières années d'une gamme nouvelle de produits à base de céréales. Ces produits, consommés tant par des adultes que par des enfants, sont pour la plupart proposés sous une forme prête à la consommation, tels les flocons de céréales diverses servant de base au petit-déjeuner ("cornflakes" ou "krispies") ou d'"amuse-gueules". Il s'agit en général d'aliments ayant subi un traitement thermique, voire un processus d'extrusion. L'intérêt du consommateur s'est accompagné en effet du développement extraordinaire de la technologie de l'extrusion. L'aromatisation de tels produits s'est heurtée à des obstacles majeurs, obstacles inhérents au processus suivi pour leur préparation. L'extrusion par exemple, fait appel à un traitement du produit à température et pression élevées. La conjugaison de ces deux paramètres se traduit invariablement en une modification ou dénaturation de l'arôme utilisé. D'autre part, la diminution subite de la pression, exercée sur la masse en extrusion à l'orifice de sortie, et la diminution, quoique plus lente, de la température provoquent une expansion rapide de la masse en extrusion et un dégagement également rapide de la vapeur d'eau. Ce phénomène s'accompagne d'une perte sensible des constituants volatils de l'arôme qui se dispersent dans l'atmosphère environnante par l'entraînement exercé par la vapeur d'eau. A cela s'ajoute la dégradation que l'arôme subit en contact avec la masse de l'aliment en extrusion par suite des réactions qui peuvent avoir lieu dans les conditions drastiques employées.

Afin de pallier ces inconvénients, l'industrie a développé des méthodes d'application d'arôme qui ont recours à l'enrobage du produit extrudé terminé. A cet effet, on fait appel à l'enrobage par giclement de l'arôme liquide en mélange, par exemple, avec une huile végétale ou avec un sirop de sucre. Une autre technique consiste à disperser directement l'arôme liquide sur l'aliment préalablement sucré. Cette méthode semble convenir particulièrement bien pour l'aromatisation d'aliments à base de céréales. Parfois cette technique est combinée avec celle de l'aromatisation "interne" où l'on mélange l'arôme avec la base de céréale avant l'extrusion. D'autres méthodes ont été également suggérées selon lesquelles l'arôme est ajouté au produit extrudé sous forme de microcapsules.

L'application particulière envisagée et la technique d'extrusion appliquée déterminent le type de méthode d'aromatisation préférentielle.

L'art antérieur fait état de bon nombre de procédés propres à la préparation de microcapsules destinées à renfermer des arômes volatils. Parmi les procédés récemment rendus publics, il convient de citer ceux décrits dans la demande de brevet européen 11 324, la demande de brevet internationale WP 8301622, le brevet US 4 339 422, la demande de brevet européen 82 459 et le brevet européen 70 719. Ces documents décrivent des procédés pour la préparation de microcapsules par des méthodes ayant recours à la technique dite du lit fluidisé. Plus particulièrement, le brevet européen 70 719 décrit un procédé d'encapsulation de liquides volatils actifs, lequel procédé consiste à gicler une suspension contenant le liquide volatil et une solution d'un support approprié sur des particules solides, en poudres ou en écailles, mises en agitation dans un mélangeur à lit fluidisé. Il se forme ainsi des capsules pouvant être ensuite utilisées pour l'aromatisation de produits comestibles de consommation.

Nous avons maintenant découvert qu'il était possible de procéder à l'aromatisation directe d'aliments hydrophiles à base de céréales, d'amidon, de pommes de terre ou de fruits séchés, comportant de préférence une surface rugueuse, à l'aide d'une substance aromatisante volatile active non-miscible à l'eau, lequel procédé est caractérisé en ce que

a. ladite substance aromatisante est intimement mise en contact avec l'aliment par giclement direct sur sa surface exposée d'une émulsion constituée par la substance aromatisante, une solution aqueuse d'un support hydrosoluble et un agent émulsifiant, et

b. l'on soumet ensuite l'aliment ainsi traité à séchage.

La substance aromatisante volatile est d'abord retenue à la surface de l'aliment par adhésion de l'émulsion grâce à la rugosité de la surface et l'effet de liaison exercé par la substance de support hydrosoluble. Sous l'effet du séchage qui s'ensuit, et qui s'effectue par simple exposition graduelle du produit traité à l'air, le cas échéant en appliquant une légère aspiration ou ventilation, la substance aromatisante est retenue sous forme de petites gouttelettes enrobées d'une couche protectrice hydrosoluble constituée par le support désormais sec.

Il s'agit en l'occurrence d'un procédé simple qui ne nécessite pas l'emploi d'un appareillage particulier, tel que pourrait l'être un atomiseur ou un mélangeur à lit fluidisé.

A titre de support hydrosoluble, on peut utiliser l'acétate de polyvinyle (PVA), l'alcool polyvinylique, des dextrines (naturelles ou modifiées), de l'amidon (naturel ou modifié), des gommes végétales, des protéines (naturelles ou modifiées), des alginates, des carraghénanes, des pectines, des xanthanes ou des dérivés de la cellulose telles par exemple la carboxyméthylcellulose, la méthylcellulose, l'hydroxyméthylcellulose ou l'hydroxypropylcellulose. Ces supports hydrosolubles peuvent être employés séparément ou en mélange. A titre préférentiel, on utilise la gomme arabique, la gomme laque, les maltodextrines, l'amidon ou des protéines partiellement hydrolysées.

A titre d'agent émulsifiant, on peut utiliser des mono- ou diglycérides d'acides gras, des esters d'acides gras avec le sorbitol ou les saccharides ou des esters d'acide tartrique, citrique, ascorbique ou lactique.

Le procédé de l'invention s'effectue par giclement d'une émulsion et à cet effet on a recours à un gicleur, par exemple à air comprimé. On peut bien entendu varier la pression en fonction de la viscosité de l'émulsion, du débit désiré et du produit que l'on désire aromatiser. Une pression comprise entre 2 et 10 bar, de préférence de 3 à 5 bar, semble être parfaitement adaptée aux différents cas examinés.

Selon un mode préférentiel d'exécution, on utilise un gicleur du type Venturi à air comprimé à 4 bar, avec une buse d'air d'un diamètre de 4 à 8 mm, une buse d'aspiration du liquide de 0,6-0,9 mm et un débit d'émulsion de 10 à 40 g/minute.

L'application de l'émulsion sur le produit à traiter peut se faire en disposant le produit sur une surface plane, par exemple, en l'étalant sur une bande roulante ou dans un tambour rotatif, ce qui permet d'obtenir un enrobage très homogène.

Les proportions pondérales respectives des différents ingrédients de l'émulsion peuvent varier dans une gamme de valeurs assez étendue. De préférence, elles sont

a. de 0,5% à 20% pour la substance aromatisante volatile active,
b. de 5% à 30% pour le support hydrosoluble,
c. de 0,1% à 10% pour l'agent émulsifiant, le restant étant constitué
d. d'eau.

Bien entendu, de telles valeurs ne doivent pas être considérées comme absolues. La concentration de la substance aromatisante en particulier dépend de la nature de l'aliment que l'on désire aromatiser et de l'effet organoleptique souhaité.

A titre de substance aromatisante active, on peut employer les compositions aromatisantes généralement employées pour conférer, améliorer ou modifier le goût et l'arôme d'aliments en général. Le cas échéant, on peut bien entendu utiliser des substances aromatiques spécifiques isolées, tout aussi bien d'origine naturelle que synthétique. L'homme de l'art connaît par expérience l'éventail d'ingrédients aromatiques utiles et il n'est pas nécessaire ici d'en définir la nature spécifique. Des exemples particuliers ont par ailleurs été donnés dans des ouvrages spécialisés et à cet effet, on peut mentionner S. Arctancer, "Perfume and Flavor Chemicals", Montclair, N.J. (1969); G. Fenaroli, "Handbook of Flavor Ingredients", 2ème éd. CRC Press, Inc., Cleveland, Ohio (1975); S. van Straten et H. Maarse, "Volatile Compounds in Food", Institut CIVO-Analysis TNO (1983).

Le caractère hydrophyle de l'aliment est déterminé par ses constituants riches en hydrates de carbone, l'amidon en particulier. Or ce sont précisément les hydrates de carbone qui représentent les éléments essentiels de la constitution d'aliments à base de céréales.

Le procédé de l'invention présente des avantages certains par rapport aux méthodes connues d'aromatisation.

Il s'agit en effet d'une méthode "directe" qui ne fait pas appel aux techniques d'encapsulation indirecte d'arômes connues dans l'art. Le procédé est donc plus économique. Comparé aux autres méthodes traditionnelles pratiquées dans l'industrie, tel l'enrobage à l'aide d'une solution concentrée en sucre ou la méthode d'aromatisation interne employée pour les aliments extrudés, le procédé de l'invention se révèle être plus efficace et plus fiable. La dispersion des constituants volatils de l'arôme dans l'atmosphère environnante pendant l'opération de giclement est moindre, ce qui entraîne d'une part une moindre perte de l'arôme et d'autre part une aromatisation plus équilibrée, le rapport respectif des différents constituants de l'arôme restant pratiquement constant pendant toute l'opération. Enfin, l'aliment ainsi aromatisé conserve pendant longtemps les propriétés organoleptiques acquises sans se dénaturer, l'arôme étant à l'abri des influences et agents extérieurs, telle l'évaporation ou l'oxydation, qui pourraient en modifier le caractère propre.

Le procédé de l'invention est tout particulièrement bien adapté à l'aromatisation d'aliments à base de céréales. De tels aliments peuvent se présenter sous une multitude de formes variées. Il s'agit en particulier de céréales prêtes à la consommation, tels les produits servis pour le petit-déjeuner comme par exemple les cornflakes, ou des produits servis généralement en guise d'accompagnement à des boissons tels les crackers, ou les "amuse-gueules" divers dont le support comestible est fortement enrichi en matière sapide. A titre d'aliment selon la présente demande on peut également citer les chips.

Un grand nombre de produits du marché peuvent donc se prêter à une aromatisation à l'aide du procédé de l'invention.

Parmi ceux-ci, on peut citer à titre d'exemple le Farmhouse Bran (Weetabix), Harvest Crunch (Quaker Oats), Crunchy Nut Cornflakes (Kellogg), les Crépites (Nestlé), les Frosties (Kellogg), les Sugar-Pops (Kellogg), les Rice-Krispies (Kellogg), les Cocoa-Puffs (General Mills), le Free Frosty (Kellogg), les Bran Flakes (Kellogg), les Grelines (Nestlé), les Nidelles (Nestlé), le Soleil (Nestlé), les Cracottes (McDougalls), le Bran Man (McDougalls) [tous les noms précités sont des marques enregistrées].

Il s'agit d'aliments à base de céréales diverses telle la farine de riz, de blé, d'orge, de maïs, de seigle, de pomme de terre ou de manioc par exemple.

Le support comestible peut également être constitué par de l'amidon et, à cet effet, on peut utiliser de l'amidon non-modifié ou modifié, soit à l'acide, soit par voie enzymatique.

Le procédé de l'invention se prête tout aussi bien à l'aromatisation d'aliments destinés aux animaux.

L'invention est illustrée de manière plus détaillée par les exemples qui suivent.

## Exemple 1

### Aromatisation de cornflakes

On a procédé à la préparation de cornflakes extrudés en mélangeant les ingrédients suivants (parties en poids):

| Germes des blé | 15,0 |
|---|---|
| Semoule de blé | 38,4 |
| Farine de blé | 22,0 |
| Semoule de maïs | 20,0 |
| Docrest MP [1] | 0,6 |
| Sel | 0,4 |
| Sucre | 1,2 |
| Diamalt sec [2] | 2,4 |
| | 100,0 |

1) Mono- et diglycérides d'acides gras (Sucrest GmbH, D-6203 Hochheim/Main, RFA)
2) Extrait de malt sucré (Diamalt AG, Munich, RFA)

A la composition ainsi obtenue, on ajoute 6% d'eau afin d'atteindre un taux d'humidité totale de 15%, puis on verse le tout dans une extrudeuse de type Brabender (Brabender, 41 Duisburg, RFA; Type 20D) et règle l'extrusion de façon à ce que la masse soit soumise à un chauffage à travers trois zones distinctes à 150°, 185° et 195°C pendant 3540 secondes. Le taux d'humidité finale est de 7%. Le produit extrudé cassé en écailles est ensuite grillé pendant 10 minutes à 150°C et il est enfin laissé refroidir.

On prépare séparement une émulsion ainsi.

Dans un récipient approprié, on met l'eau en agitation lente au moyen d'un agitateur magnétique ou d'un agitateur à hélice. Les composants solides constitués par le support hydrosoluble (tel l'amidon, les dextrines ou l'alginate) sont ajoutés lentement par petites portions. On laisse ensuite gonfler et dissoudre le support à température ambiante, après quoi l'émulsifiant d'abord et l'arôme ensuite sont ajoutés à la solution aqueuse maintenue sous agitation jusqu'à l'obtention d'une émulsion homogène et fine.

Une base émulsifiante a été ainsi préparée à l'aide des ingrédients suivants (parties en poids):

| Gomme arabique | 2,4 |
|---|---|
| Capsule [1] | 20,0 |
| Hydrokollan [2] PP4 | 2,5 |
| Tween [3] 20 | 0,1 |
| Neobee [4] M5 | 2,0 |
| Eau | 73,0 |
| | 100 |

1) amidon modifié de maïs (origine: National Starch and Chemical Corp., Bridgewater, N.J., USA)
2) hydrolysate de collagène (origine: Friedrich Naumann, Memmingen, RFA)
3) Polyoxyéthylène(–4)–sorbitan monolaurate (Atlas Chemical Industries N.V., Everberg, Belgique)
4) Triglycéride de l'acide caprique/caprylique (PVO Intern., Inc., New York, USA)

Au mélange ainsi préparé on ajoute à raison de 2% en poids, un arôme Banane (54.330/A, Firmenich SA, Genève) et 100 g des cornflakes extrudés sont giclés avec un mélange de 25 g de sirop de sucre (65° Brix) et 7,5 g de l'émulsion aromatisée.

En opérant de façon identique, on procède à l'aromatisation d'échantillons de 100 g chacun de cornflakes à l'aide d'un arôme Orange (502.172/A, Firmenich SA, Genève; 5,0 g d'émulsion contenant l'arôme à raison de 2%) et un arôme Framboise (580.066/A, Firmenich SA, Genève; 5,0 g d'émulsion contenant l'arôme à raison de 2%).

Comparés avec des échantillons de cornflakes aromatisés selon la technique d'aromatisation interne avant extrusion et selon la méthode traditionnelle d'enrobage, les échantillons de cornflakes aromatisés à l'aide du procédé de l'invention possédaient, après un mois de stockage, un goût nettement plus marqué et frais. L'effet observé était par ailleurs identique selon que les cornflakes étaient goûtés seuls ou avec du lait.

Exemple 2

Aromatisation de snacks

Une base de maïs pour la préparation de snacks a été préparée en mélangeant 99,2 parties en poids de semoule de maïs avec 0,8 parties de poudre d'oignon.

Le contenu en eau du mélange a été amené à 12% par l'addition facultative d'eau en fonction du taux d'humidité de la semoule de maïs.

On charge ainsi une extrudeuse avec la base obtenue et règle l'extrusion de façon à ce que la masse soit soumise à un chauffage à travers trois zones distinctes à 150°, 190° et 195°C respectivement, pendant 35-40 secondes. L'orifice de sortie de l'extrudeuse est tel qu'on obtient le produit sous forme de petits boudins (curls) et tubes cylindriques. A la sortie de l'extrudeuse, les snacks contiennent 3 à 4% d'humidité et sont ensuite séchés à 70°C jusqu'à ce que le taux d'humidité descende à environ 2%.

On mélange ensuite un arôme poulet (FIRANOVA, marque enregistrée, poulet 573.000/P, Firmenich SA, Genève) avec l'émulsion décrite à l'Exemple 1 à raison de 10 parties d'arôme pour 90 parties d'émulsion.

10 G de l'émulsion ainsi aromatisée mélangée à 20 g de graisse de coco est giclée à l'aide d'un gicleur de type Venturi (4 bar) sur 80 g des snacks extrudés.

L'on compare ensuite leurs propriétés gustatives avec celles d'un échantillon de snacks aromatisés avec le même arôme poulet (1 g) mélangé à 20 g de graisse de coco pour 80 g de snacks.

Après un mois de stockage, le goût des snacks aromatisés à l'aide du procédé de l'invention était perçu plus rapidement et était plus frais que celui de l'échantillon de contrôle.

## Exemple 3

### Aromatisation de biscuits

Suivant la technique de giclement décrite plus haut à l'Exemple 1, 200 g de biscuits du type nantais du commerce (Migros, Genève) ont été aromatisés à l'aide de 6 g d'un mélange constitué par la base émulsifiante décrite à l'Exemple 1 et un des arômes suivants à raison de 0,5 parties d'arôme pour 99,5 parties de base

Framboise 52.354/H 1)
Fraise 502.223/A 1)
Abricot 52.247/A 1)
1) origine : Firmenich SA, Genève

L'impact de l'arôme des biscuits ainsi aromatisés était bien marqué immédiatement après avoir été mouillés par la salive.

## Exemple 4

### Aromatisation de biscuits

En opérant comme décrit à l'exemple précédent, on a aromatisé des biscuits sablés (Migros, Genève) à l'aide d'un arôme Cake 54.296/A et Panettone 51.038/A (contenus à 1% dans la base émulsifiante). 5 G de l'émulsion aromatisée a été giclée sur 100 g de biscuits.

Le goût des biscuits ainsi obtenus était perçu très nettement immédiatement après avoir été mouillés par la salive.

## Exemple 5

### Aromatisation de crackers

Une pâte de base pour crackers a été préparée en mélangeant les ingrédients suivants (parties en poids) :

| | |
|---|---|
| Farine | 560 |
| Margarine | 85 |
| Sel | 6 |
| Extrait de malt | 10 |
| Sirop de sucre (65%) | 5 |
| Levure | 25 |
| Eau à 32°C | 220 |
| Total | 911 |

On prépare séparément un mélange de couverture en mélangeant 400 g de farine, 120 g de margarine et 6 g de sel.

La fermentation de la pâte de base a lieu dans un récipient de type rotatif Simon à 32°C avec ventilation, puis la pâte est laminée.

Le dépôt du mélange de couverture s'effectue en giclant 50 g du mélange de couverture dans la zone médiane de la pâte de base laminée. On replie ensuite un côté et gicle à nouveau avec 50 g du mélange de couverture. On replie l'autre côté et on procède au laminage jusqu'à l'obtention d'une pâte ayant l'épaisseur de 1,5 mm. La cuisson a lieu dans un four de type Simon à 225°C pendant 7 à 8 minutes après quoi les crackers obtenus sont giclés avec de la graisse de noix de coco et saupoudrés avec du sel.

Un arôme de type jambon (Jambon 53.070/T, Firmenich SA, Genève) a été mélangé avec la base émulsifiante décrite à l'Exemple 1 à raison de 2,5 parties en poids d'arôme pour 97,5 parties de base. 2 G de l'émulsion aromatisée ont été giclés sur 100 g de crackers.

Le goût des crackers ainsi obtenus a été comparé avec celui de crackers aromatisés selon deux méthodes traditionnelles, à savoir

    a. 0,05% d'arôme sont additionnés à la pâte avant la cuisson

    b. 0,05 g d'arôme dissous dans 2 g d'huile de noix de coco sont giclés sur 100 g de crackers terminés.

Les différents échantillons obtenus ont été goûtés après 1 mois de stockage. Les crackers aromatisés selon le procédé de l'invention possédaient un goût plus marqué et plus frais que ceux aromatisés par l'une des techniques traditionnelles.

## Revendications

1. Procédé pour l'aromatisation d'aliments hydrophiles à base de céréales, d'amidon, de pommes de terre ou de fruits séchés à l'aide d'une substance aromatisante volatile active non-miscible à l'eau, caractérisé en ce que
    a. ladite substance aromatisante est intimement mise en contact avec l'aliment par giclement direct, sur sa surface exposée, d'une émulsion constituée par la substance aromatisante, une solution aqueuse d'un support hydrosoluble et un agent émulsifiant, et
    b. l'on soumet ensuite l'aliment ainsi traité à séchage.

2. Procédé selon la revendication 1, caractérisé en ce que l'aliment hydrophile possède une surface exposée rugueuse.

3. Procédé selon la revendication 1, caractérisé en ce que le support hydrosoluble consiste en l'acétate de polyvinyle, l'alcool polyvinylique, des dextrines, de l'amidon, de la gélatine, des gommes végétales, des protéines, des alginates, des carragénanes, des pectines, des xanthanes, de la carboxyméthylcellulose, de la méthylcellulose, de l'hydroxyéthylcellulose ou de l'hydroxypropylcellulose.

4. Procédé selon la revendication 1, caractérisé en ce que l'agent émulsifiant consiste en un mono- ou un diglycéride d'acide gras, d'ester d'acide gras avec le sorbitol ou un saccharide, ou un ester de l'acide tartrique, citrique, ascorbique ou lactique.

5. Procédé selon la revendication 1, caractérisé en ce que l'émulsion est constituée par
    a) 0,5% à 20% de substance aromatisante volatile active,
    b) 5% à 30% de support hydrosoluble,
    c) 0,1% à 10% d'agent émulsifiant, et
    d) 50 à 90% d'eau.

6. Procédé selon la revendication 1, caractérisé en ce que l'émulsion est mélangée avant giclement avec de la graisse végétale.

7. Procédé selon la revendication 1, caractérisé en ce que l'émulsion est mélangée avant giclement avec une solution aqueuse de sucre.

8. Aliment aromatisé au moyen du procédé selon la revendication 1.

9. A titre d'aliment selon la revendication 8, les flocons de céréales.

10. A titre d'aliment selon la revendication 8, les pommes chips.

11. A titre d'aliment selon la revendication 8, les biscuits salés.

12. A titre d'aliment selon la revendication 8, un aliment pour animaux.

## Claims

1. Process for the aromatization of a cereal, starch, potato or dried fruit based hydrophilic food composition by means of a volatile water-immiscible active flavouring substance, characterized in that:
   a. the said flavouring substance is put into intimate contact with the food composition by directly spraying onto its exposed surface an emulsion consisting of the flavouring substance, an aqueous solution of a water-soluble carrier and an emulsifying agent, and
   b. the food composition thus treated is subsequently dried.

2. Process according to claim 1, characterized in that the hydrophilic food composition has a rugose exposed surface.

3. Process according to claim 1, characterized in that the water-soluble carrier consists of polyvinyl acetate, polyvinyl alcohol, dextrins, starch, gelatine, vegetable gums, proteins, alginates, carrageenans, pectins, xanthanes, carboxymethylcellulose, methylcellulose, hydroxyethylcellulose or hydroxypropylcellulose.

4. Process according to claim 1, characterized in that the emulsifying agent consists of a mono-or diglyceride of a fatty acid, an ester of a fatty acid with sorbitol or with a saccharide, or an ester of tartaric, citric, ascorbic or lactic acid.

5. Process according to claim 1, characterized in that the emulsion consists of
   a) 0.5% to 20% of active volatile flavouring substance,
   b) 5% to 30% of water-soluble carrier,
   c) 0.1% to 10% of emusifying agent, and
   d) 50% to 90% of water.

6. Process according to claim 1, characterized in that the emulsion is mixed before spraying with vegetable fat.

7. Process according to claim 1, characterized in that the emulsion is mixed before spraying with an aqueous solution of sugar.

8. Food composition flavoured by means of the process according to claim 1.

9. As a food composition according to claim 8, cereal flakes.

10. As a food composition according to claim 8, potato chips.

11. As a food composition according to claim 8, salted biscuits.

12. As a food composition according to claim 8, an animal feed.

## Patentansprüche

1. Verfahren zur Aromatisierung von hydrophilen Nahrungsmitteln die aus Getreide, Stärke, Kartoffeln oder Dörrobst bestehen, mittels eines flüchtigen, wasserunvermischbaren, aktiven Geschmackstoffs, dadurch gekennzeichnet, dass
   a. der obengenannte Geschmackstoff mit der exponierten Oberfläche des Nahrungsmittels, durch direktes Aufsprühen einer Emulsion, die aus dem Geschmackstoff, einer wässerigen Lösung eines wasserlöslichen Trägers und einem Emulgator besteht, in engen Kontakt gebracht ist, und dass
   b. man danach das so behandelte Nahrungsmittel trocknet.

2. Verfahren gemäss Anspruch 1, dadurch gekennzeichnet, dass das hydrophile Nahrungsmittel eine unebene Oberfläche hat.

3. Verfahren gemäss Anspruch 1, dadurch gekennzeichnet, dass der wasserlösliche Träger aus Polyvinylacetat, Polyvinylalkohol, Dextrinen, Stärke, Gelatine, Pflanzenhydrokolloiden, Proteinen, Alginaten, Karrageenen, Pektinen, Xanthanen, Carboxymethylzellulose, Methylzellulose, Hydroxyethylzellulose oder Hydroxypropylzellulose besteht.

4. Verfahren gemäss Anspruch 1, dadurch gekennzeichnet, dass der Emulgator aus einem Fettsäure-monoglycerid oder -diglycerid, einem Ester einer Fettsäure mit Sorbitol oder mit einem Saccharid, oder einem Weinsäureester, Zitronensäureester, Ascorbinsäureester oder Milchsäureester besteht.

5. Verfahren gemäss Anspruch 1, dadurch gekennzeichnet, dass die Emulsion aus
   a) 0,5% bis 20% des flüchtigen, aktiven Geschmackstoffs,
   b) 5% bis 30% des wasserlöslichen Trägers,
   c) 0,1% bis 10% des Emulgators, und
   d) 50% bis 90% Wasser
   besteht.

6. Verfahren gemäss Anspruch 1, dadurch gekennzeichnet, dass die Emulsion vor dem Aufsprühen, mit einem Pflanzenfett gemischt wird.

7. Verfahren gemäss Anspruch 1, dadurch gekennzeichnet, dass die Emulsion vor dem Aufsprühen, mit einer wässerigen Zuckerlösung gemischt wird.

8. Nahrungsmittel aromatiert mittels des Verfahrens gemäss Anspruch 1.

9. Getreideflocken, als Nahrungsmittel gemäss Anspruch 1.

10. Kartoffelchips, als Nahrungsmittel gemäss Anspruch 1.

11. Gesalzenes Gebäck, als Nahrungsmittel gemäss Anspruch 1.

12. Tierfutter, als Nahrungsmittel gemäss Anspruch 1.